# EUROPÄISCHE PATENTANMELDUNG

(11) **EP 0 683 970 A2**
(43) Veröffentlichungstag der Anmeldung: **29.11.1995**
(21) Anmeldenummer: 95107392.3
(22) Anmeldetag: 16.05.1995
(51) Int. Cl.: A01F 12/44

(54) **Reinigungsgebläse einer Dreschmaschine**

(30) Priorität: 26.05.1994 US 250191
(71) Anmelder: DEERE & COMPANY, Moline, Illinois 61265 (US)
(72) Erfinder: Lauer, Fritz Karl, Bettendorf, Iowa 52722 (US); Heim, Daniel Marc, East Moline, Illinois 61244 (US); Becker, Klaus Ernst, East Moline, Illinois 61244 (US); Cutler, John Frederick, Indianapolis, Indiana 46256 (US); Toksoy, Mehmet Can, Carmel, Indiana 46032 (US); Didandeh, Hooshang, Zionsville, Indiana 46077 (US)
(74) Vertreter: Feldmann, Bernhard

(57) **Zusammenfassung**

Ein Reinigungsgebläse (30) einer Dreschmaschine (10), das mittels eines Gebläserades Luft axial ansaugt und tangential abgibt, ist mit wenigstens einem Luftleitabschnitt (64, 70) versehen, der sich an einer einen Luftauslaßkanal (46, 52) begrenzenden Kante (60, 62) befindet. Dieser Luftleitabschnitt (64, 70) läuft endseitig nicht in einer geraden Linie, sondern gekrümmt aus, um die geförderte Luft an die Randzonen zu leiten und somit eine gleichmäßige Luftströmung zu erzeugen.

## Beschreibung

Die Erfindung betrifft ein Reinigungsgebläse einer Dreschmaschine mit wenigstens einem Gebläserad und einem Gehäuse mit wenigstens einem tangential angeschlossenen Luftauslaßkanal, der mündungsseitig eine stromaufwärts und eine stromabwärts gelegene Kante aufweist.

Die US-A-4,303,079 zeigt ein Reinigungsgebläse eines Mähdreschers mit mehreren nebeneinander auf einer gemeinsamen Welle befestigten Gebläserädern, die jeweils in axialer Richtung Luft ansaugen und in tangentialer Richtung durch jeweils einen Luftauslaßschacht abgeben.

Weiter zeigt die US-A-4,307,732 ein Gebläse eines Mähdreschers, das die Luft in gleicher Weise ansaugt und abfördert, das allerdings in einen ersten und einen zweiten Luftauslaßschacht mündet.

Beiden Gebläsen ist gemeinsam, daß sie die Luft nicht in einer über die Breite des Luftauslaßschachts gleichmäßigen Verteilung abgeben.

Das der Erfindung zugrundeliegende Problem wird darin gesehen, daß die ungleichmäßige Luftverteilung zu einer ungleichmäßigen Abscheidung von Spreu und Kurzstroh aus dem zu reinigenden Gemenge führt.

Dieses Problem wird erfindungsgemäß durch die Lehre des Patentanspruchs 1 gelöst, wobei in den davon abhängigen Patentansprüchen Merkmale aufgeführt sind, die diese Lehre in vorteilhafter Weise weiterentwickeln.

Auf diese Weise wird die abgegebene Luft an die Randbereiche des Luftauslaßkanals geleitet, wo ansonsten wegen der Wandreibung eine geringere Strömung herrschen würde als in der Mitte. Somit findet über die gesamte Breite des Luftauslaßkanals oder der Luftauslaßkanäle eine gleichmäßige Luftverteilung statt. Die Form des Luftleitabschnitts ist entsprechend der ohne Luftleitabschnitt zu erwartenden Luftungleichverteilung gewählt. Zwar zeigt die japanische Patentanmeldung 54-122415 bereits ein Gebläse mit einer nicht linear auslaufenden Wand in einem Luftauslaufbereich; mit diesem Gebläse kann aber aufgrund mangelnder Luftführung im Auslaßbereich keine gezielte Luftabgabe erreicht werden, weshalb die Form des Abschlußbleches dort auch nicht der Erzielung bestimmter Strömungsverhältnisse sondern der Verminderung von Geräuschen dient.

In einer detaillierteren Form kann der Luftleitabschnitt sowohl in der Art einer Zunge, als auch in der Art eines Ausschnitts ausgebildet sein, die vorzugsweise und unter optimalen Verhältnissen konvex bzw. konkav auslaufen. Bei der konvexen Ausbildung wird die abströmende Luft zur Seite geleitet, bei der konkaven Form wird in der Mitte weniger Luft gefördert.

Insbesondere bei Gebläsen, die die Luft axial ansaugen und tangential abgeben, ist die Erfindung besonders wertvoll, weil dort durch die Umlenkung zusätzliche Luftbeschleunigungen und Strömungs- änderungen eintreten.

Die Luftleitabschnitte können Teil der jeweiligen Kante der Wand, aber auch an diese z. B. anflanschbare Bleche oder dergleichen sein, die auch einstellbar oder in ihrem Profil anpaßbar ausgebildet werden können.

Das Vorsehen des zur Seite drängenden Luftleitabschnitts an der stromabwärts gelegenen und des in der Mitte weniger aufnehmenden Luftleitabschnitts an der stromaufwärts gelegenen Kante des Luftauslaßschachts führt zu optimalen Strömungsverhältnissen der abgegebenen Luft.

Wenn es auch möglich wäre, die Luftverteilung durch Luftleitabschnitte auf nur einem Teil der Breite des Luftauslaßkanals zu beeinflussen, so findet eine volle Kontrolle und somit das Erreichen einer gleichmäßigen Luftverteilung insbesondere dann statt, wenn der Luftleitabschnitt die Luft auf der vollen Breite des Luftauslaßkanals steuert.

Die Erfindung ist bei Reinigungsgebläsen mit einem, wie auch mit zwei Luftauslaßkanälen anwendbar, wobei beim Vorhandensein zweier Luftauslaßkanäle, die durch eine gemeinsame Wand voneinander getrennt sind, die beide trennende Wand gleichzeitig die stromaufwärts gelegene Wand des Luftauslaßkanals mit der gesteuerten Luftverteilung darstellt.

Die besonders kritischen Strömungsverhältnisse in dem sich über die gesamte Breite einer Reinigungsvorrichtung erstreckenden Übergangsbereich zwischen zwei Förderern, z. B. einem Vorbereitungsboden und einem Stufenboden in einem Mähdrescher, werden stabilisiert, wenn der Luftauslaßkanal mit der gesteuerten Luftverteilung zu diesem Abscheidebereich führt.

Je nach der Breite der Fläche, auf der eine Abscheidung stattfinden soll, abhängig von der Möglichkeit, ausreichend Luft anzusaugen und dem zu erbringenden Anfahrmoment des Gebläses kann sowohl ein einziges Gebläserad wie vorteilhafterweise auch eine Vielzahl über die Breite vorgesehener Gebläseräder vorgesehen werden.

In der Zeichnung sind zwei nachfolgend näher beschriebene Ausführungsbeispiele der Erfindung dargestellt. Es zeigt:
Figur 1 eine Dreschmaschine mit einem erfindungsgemäßen Reinigungsgebläse in Seitenansicht,

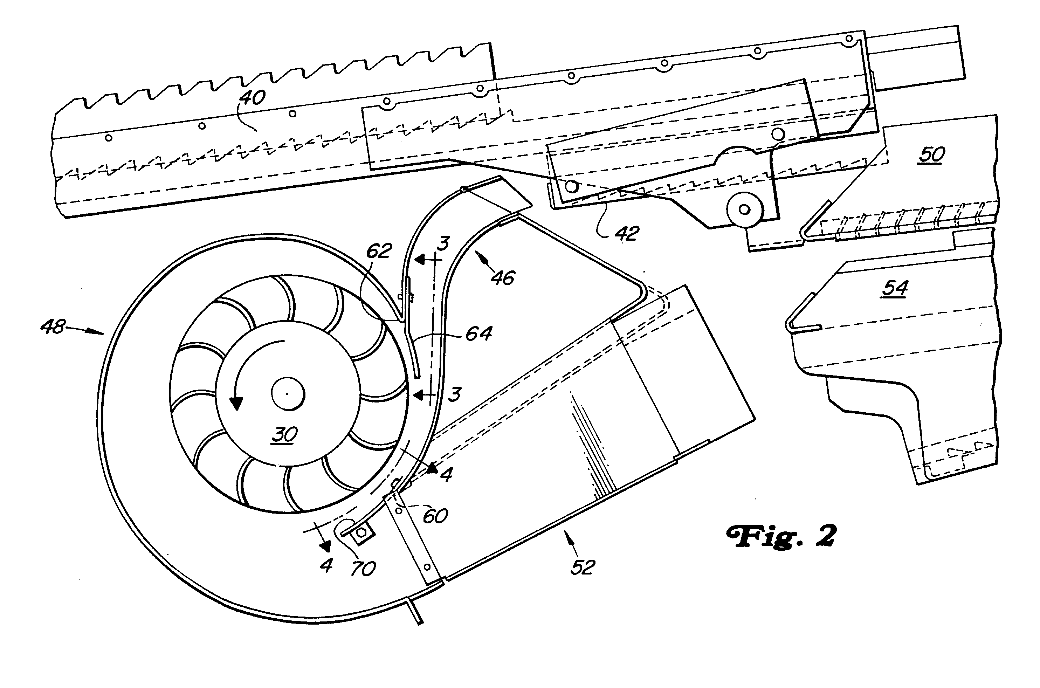

Figur 2 das Reinigungsgebläse aus Figur 1 in vergrößerter Darstellung und in Seitenansicht,
Figur 3 einen Luftleitabschnitt des Reinigungsgebläses nach einem ersten Ausführungsbeispiel und
Figur 4 einen Luftleitabschnitt des Reinigungsgebläses nach einem zweiten Ausführungsbeispiel.

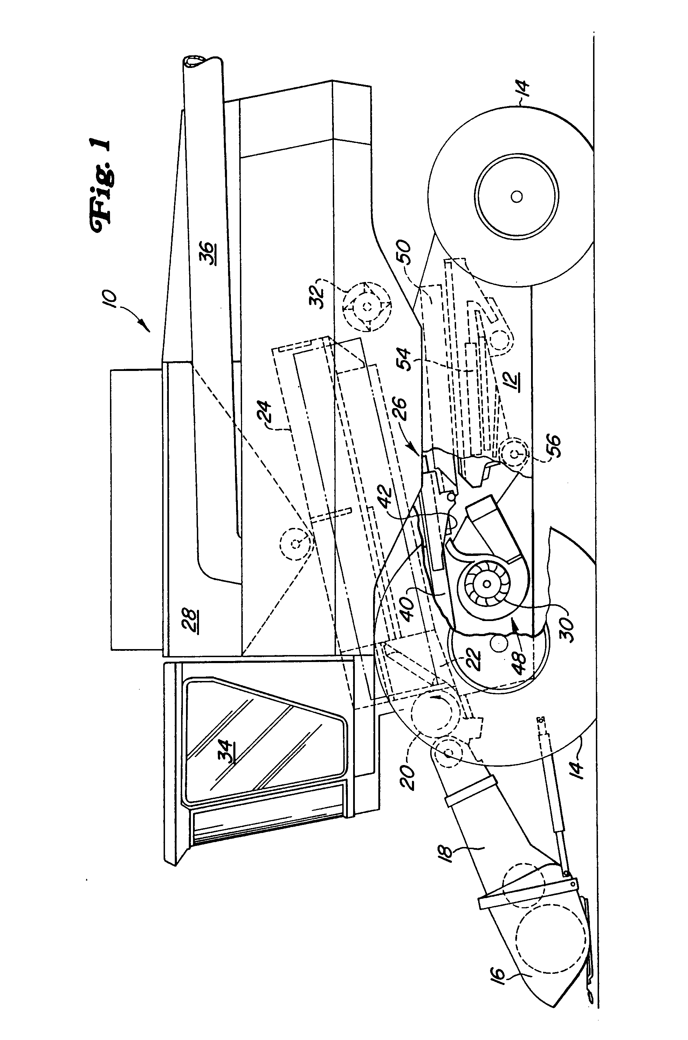

Figur 1 ist eine Seitenansicht einer Dreschmaschine 10 in der Art eines selbstfahrenden landwirtschaftlichen Mähdreschers. Diese Dreschmaschine 10 enthält ein Traggestell 12 mit Rädern 14, die dieses Traggestell 12 auf dem Boden abstützen. Von der Dreschmaschine 10 erstreckt sich nach vorne eine Erntebergungsvorrichtung 16 in der Art eines Schneidwerks, die geerntetes Gut einem Schrägförderer 18 zuleitet. Der Schrägförderer 18 ist eine Fördervorrichtung, die geerntetes Gut, z. B. Getreide, Dresch- Abscheide- und Reinigungsvorrichtungen zwischen Seitenwänden der Dreschmaschine 10 zuführt, wo es jeweils entsprechend bearbeitet wird. Obwohl die vorliegende Erfindung im Zusammenhang mit einem sogenannten Axialmähdrescher gezeigt und erläutert wird, kann sie selbstverständlich in Dreschmaschinen 10 anderer, insbesondere herkömmlicher Bauart, wie auch in stationären Reinigungsanlagen, mit einem erfindungsgemäßen Reinigungsgebläse 30 verwendet werden.

Bei dem gezeigten Ausführungsbeispiel der Dreschmaschine 10 führt der Schrägförderer 18 das Erntegut einer querliegenden Trommel 20 zu, die es durch einen Übergangsabschnitt 22 einer axial wirkenden Dresch- und Abscheidevorrichtung 24 aufgibt. Das Getreide und die Spreu werden von dieser Dresch- und Abscheidevorrichtung 24 einer Reinigungsvorrichtung 26 aufgegeben. Von der Reinigungsvorrichtung 26 aus gelangt gereinigtes Getreide in einen Korntank 28, während die Spreu mittels des Reinigungsgebläses 30 zum rückwärtigen Ende der Dreschmaschine 10 hinausgeblasen wird. Erntegut, das weder gereinigtes Getreide noch Spreu ist, wird von der axialen Dresch- und Abscheidevorrichtung 24 einer ebenfalls quer gelagerten Trommel 32 zugeführt, die es wiederum zum rückwärtigen Ende der Dreschmaschine 10 auswirft. In dem Korntank 28 zwischenzeitlich gelagertes gereinigtes Getreide kann von einer sich in einer Fahrerkabine 34 befindlichen Bedienungsperson durch die Inbetriebnahme einer Entladeschnekke 36 ausgetragen werden. Die Dresch- und Abscheidevorrichtung 24, sowie die Reinigungsvorrichtung 26 befinden sich zwischen den Seitenwänden des Traggestells 12.

Ein Gemenge aus Getreide und Spreu wird mittels eines Vorbereitungsbodens 40 der Reinigungsvorrichtung 26 zugeführt, von wo aus es zuerst einem Stufenboden 42 aufgegeben wird. Wenn das Getreide und die Spreu von dem Vorbereitungsboden 40 auf den Stufenboden 42 fallen, unterliegen sie einem zweiten Luftstrom aus einem zweiten Luftauslaßkanal 46 eines Gehäuses 48 des Reinigungsgebläses 30, der es durchströmt und dabei einen Teil der Spreu entfernt. Von dem Stufenboden 42 aus gelangt das Gemenge zu einem Kurzstrohsieb 50. Ein erster Luftstrom wird ausgehend von einem ersten Luftauslaßkanal 52 des Gehäuses 48 durch das Kurzstrohsieb 50 hindurchgeführt, um weitere Spreu zu entfernen. Die evtl. noch in dem Gemenge enthaltene Spreu wird schließlich von einem Sieb 54 entfernt, bevor es über eine Körnerschnecke 56 dem Korntank 28 zugefördert wird. Der Stufenboden 42, das Kurzstrohsieb 50 und das Sieb 54 sind Teile eines Siebkastens und werden in bekannter Weise oszillierend bewegt.

Wie bereits oben beschrieben worden ist, ist das Gehäuse 48 mit einem ersten Luftauslaßkanal 52 versehen, um einen ersten Luftstrom durch das Kurzstrohsieb 50 und das Sieb 54 hindurch zu bewegen. Der zweite Luftauslaßkanal 46 leitet den zweiten Luftstrom durch das Gemenge aus Spreu und Getreide, das von dem Vorbereitungsboden 40 auf den Stufenboden 42 fällt.

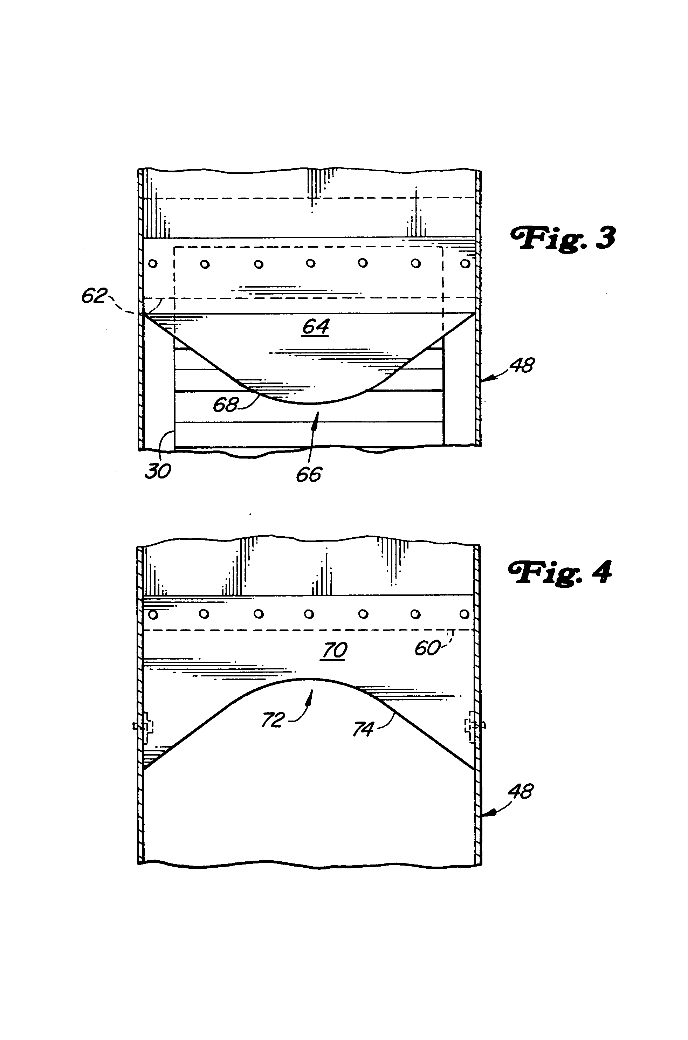

Der zweite Luftauslaßschacht 46 ist mit einer stromaufwärts und einer stromabwärts gelegenen Kante 60 und 62 versehen. Nach einem ersten Ausführungsbeispiel der Erfindung ist die stromabwärts gelegene Kante 62 mit einem Luftleitabschnitt 64 versehen, wie er am besten aus Figur 3 zu ersehen ist. Dieser Luftleitabschnitt 64 läuft an dem freien, d. h. zu dem Gebläserad zeigenden Ende nicht in einer geraden Linie, sondern in einer Kurve aus, die von einer Luftverteilung in dem Luftauslaßkanal ausgeht, wie sie ohne den Luftleitabschnitt 64 vorhanden wäre, so daß mit dem Luftleitabschnitt 64 eine über die Breite des Luftauslaßkanals 46 gleiche Luftverteilung erreicht wird. Genauer betrachtet hat der Luftleitabschnitt 64 einen Mittenbereich 66, der sich nach außen in der Luftströmungsrichtung aufbiegt und somit mit seinen Außenkanten stromabwärts seiner Anfangskante endet. Dieser in einer Krümmung auslaufende Mittenbereich 66 bildet somit eine konvexe Leitkante 68 und vergleichmäßigt den zweiten Luftstrom über die Quererstreckung, d. h. die Breite des zweiten Luftauslaßkanals 46.

Nach einem zweiten Ausführungsbeispiel ist die stromaufwärts gelegene Kante 60 mit einem Luftleitabschnitt 70 versehen, der am besten in Figur 4 gezeigt ist und ebenfalls nicht in einer linearen Kante ausläuft. Der Luftleitabschnitt 70 hat nun aber einen als Ausschnitt geformten Mittenbereich 72, der nach innen gekrümmt ist und zwar in der Luftstromrichtung, und der somit eine konkave Leitkante 74 bildet. Diese Krümmung nach innen bewirkt ebenfalls eine Vergleichmäßigung des zweiten Luftstroms über die Breite des zweiten Luftauslaßkanals 46.

Es wird darauf hingewiesen, daß ein einziger Luftleitabschnitt 64 oder 70 ausreichend sein kann, um eine gleichmäßige Luftverteilung zu erzeugen, und obwohl beide Luftleitabschnitte 64, 70 gezeigt sind, wird regelmäßig nur einer verwendet.

Beide Luftleitabschnitte 64, 70 können in den die Kanten 60, 62 bildenden Wänden integriert sein, aber auch - wie in den Ausführungsbeispielen gezeigt - in separaten Blechen vorgesehen sein, die an die vorgenannten Wände angeschraubt werden.

Die mit beiden Luftleitabschnitten 64, 70 erzielte Vergleichmäßigung der Luftströmung basiert darauf, daß die Luft in den Außenbereichen besser geführt wird und somit die Wandreibungsverluste geringer sind, und daß dem Mittenbereich weniger Luft zugeführt wird, was insbesondere bei dem Luftleitabschnitt 70 dadurch erfolgt, daß ein Teil der in der Mitte geführten Luft nicht dem zweiten, sondern dem ersten Luftauslaßkanal 52 zugeführt wird.

## Patentansprüche

1. Reinigungsgebläse (30) einer Dreschmaschine (10) mit wenigstens einem Gebläserad und einem Gehäuse (48) mit wenigstens einem tangential angeschlossenen Luftauslaßkanal (46, 52), der mündungsseitig eine stromaufwärts und eine stromabwärts gelegene Kante (60, 62) aufweist, dadurch gekennzeichnet, daß wenigstens eine der Kanten (60, 62) in einem Luftleitabschnitt (64, 70) mit einer über die Breite des Luftauslaßkanals (46) unterschiedlichen Länge in der Richtung des Luftstroms ausläuft.

2. Reinigungsgebläse nach Anspruch 1, dadurch gekennzeichnet, daß der Luftleitabschnitt (64, 70) in einem sich von einem Mittenbereich (66) nach außen in der Luftstromrichtung krümmenden, insbesondere konvexen Vorsprung und/oder einer von einem Mittenbereich (72) nach außen entgegen der Luftstromrichtung krümmenden, insbesondere konkaven, Ausnehmung ausläuft.

3. Reinigungsgebläse nach Anspruch 1 oder 2, dadurch gekennzeichnet, daß die Luft in axialer Richtung angesaugt und in tangentialer Richtung abgegeben wird.

4. Reinigungsgebläse nach einem oder mehreren der vorherigen Ansprüche, dadurch gekennzeichnet, daß der Luftleitabschnitt (64, 70) als Teil der betreffenden Kante (60, 62) oder als ein an der Kante (60, 62) befestigbarer separater Teil ausgebildet ist.

5. Reinigungsgebläse nach einem oder mehreren der vorherigen Ansprüche, dadurch gekennzeichnet, daß der konvex ausgebildete Luftleitabschnitt (64) an der stromabwärts und der konkav ausgebildete Luftleitabschnitt (70) an der stromaufwärts gelegenen Kante (60, 62) vorgesehen ist.

6. Reinigungsgebläse nach einem oder mehreren der vorherigen Ansprüche, dadurch gekennzeichnet, daß sich der Luftleitabschnitt (64, 70) über die gesamte Breite des Luftauslaßkanals (46) erstreckt.

7. Reinigungsgebläse nach einem oder mehreren der vorherigen Ansprüche, dadurch gekennzeichnet, daß zwei Luftauslaßkanäle (46, 52) vorgesehen sind und der von einem Mittenbereich (72) nach außen gegen die Luftstromrichtung gekrümmte, insbesondere konkave, als Ausnehmung ausgebildete Luftleitabschnitt (70) der beide Luftauslaßkanäle (46, 52) trennenden Kante (60) zugeordnet ist.

8. Reinigungsgebläse nach einem oder mehreren der vorherigen Ansprüche, dadurch gekennzeichnet, daß bei zwei Luftauslaßkanälen (46, 52) einer zu einer Fallstufe zwischen einem Vorbereitungsboden (40) und einem Stufenboden (42) und einer zu einem dieser Fallstufe folgenden Kurzstrohsieb (50) führt.

9. Reinigungsgebläse nach einem oder mehreren der vorherigen Ansprüche, dadurch gekennzeichnet, daß mehrere um eine gemeinsame Rotationsachse drehende, zueinander parallele und einen Abstand zueinander aufweisende Gebläseräder vorgesehen sind.
